# EUROPEAN PATENT APPLICATION

(11) **EP 4 663 855 A1**
(43) Date of publication of application: **17.12.2025**
(21) Application number: 25180607.1
(22) Date of filing: 03.06.2025
(51) Int. Cl.: E02F 9/20

(54) **WORK MACHINE CONTROL METHOD, WORK MACHINE CONTROL PROGRAM, WORK MACHINE CONTROL SYSTEM, AND WORK MACHINE**

(30) Priority: 12.06.2024 JP 2024095174
(71) Applicant: Yanmar Holdings Co., Ltd., Osaka-shi, Osaka (JP)
(72) Inventor: KABATA, Hiroki, Chikugo (JP)
(74) Representative: Sekiguchi, Kazuya

(57) **Abstract**

[Problem]

To provide a technique capable of achieving both higher work efficiency and higher safety during battery charging.

[Solution]

A hydraulic excavator as a work machine includes a battery that stores electric power, a connector to which a charging cable used to charge the battery is connected, and an electric motor that is driven by electric power supplied from the battery. A method of controlling the hydraulic excavator includes detecting a connection state between the charging cable and the connector, and performing a suppression process of suppressing an action of the hydraulic excavator while permitting the action of the hydraulic excavator based on the connection state in a case where the electric motor is in a rotatable state.

## Description

### TECHNICAL FIELD

The present invention relates to a work machine control method, a work machine control program, a work machine control system, and a work machine.

### BACKGROUND ART

Patent Document 1 discloses a work machine that includes a power storage device (e.g., lithium-ion battery) that stores electric power, a charging port for charging the power storage device with electric power from an external power supply, and an electric motor that is driven by electric power supplied from the power storage device. A charging cable that extends from the external power supply is connected to the charging port to charge the power storage device. When the charging cable is connected to the charging port while the work machine is in operation, the electric motor is stopped.

### PRIOR ART DOCUMENT

### PATENT DOCUMENT

Patent Document 1: International Publication WO2022/210391

### SUMMARY OF INVENTION

### TECHNICAL PROBLEM

When the electric motor is stopped, an action of the work machine is disabled. Thus, for example, each time when the work machine is moved to a safer place for charging of the power storage device (battery), an operator of the work machine needs to disconnect the charging cable from the charging port (connector), and this may lead to lower work efficiency during charging of the power storage device. On the other hand, if the work machine is allowed to freely perform an action during charging of the power storage device, for example, a traveling action may cause damage to the charging cable connected to the charging port, causing an operator to receive an electric shock via the damaged charging cable.

The present invention has been made to solve the above problem, and an object of the present invention is to provide a technique capable of achieving both higher work efficiency and higher safety during battery charging.

### SOLUTION TO PROBLEM

A work machine control method according to an aspect of the present invention is a work machine control method of controlling a work machine including a battery that stores electric power, a connector to which a charging cable used to charge the battery is connected, and an electric motor that is driven by electric power supplied from the battery, the method including: detecting a connection state between the charging cable and the connector; and performing a suppression process of suppressing an action of the work machine while permitting the action of the work machine based on the connection state in a case where the electric motor is in a rotatable state.

A work machine control program according to another aspect of the present invention causes at least one arithmetic device to perform the work machine control method.

A work machine control system according to another aspect of the present invention is a work machine control system that controls a work machine including a battery that stores electric power, a connector to which a charging cable used to charge the battery is connected, and an electric motor that is driven by electric power supplied from the battery, the control system including: a detection unit that detects a connection state between the charging cable and the connector; and a suppression control unit that suppresses an action of the work machine while permitting the action of the work machine based on the connection state in a case where the electric motor is in a rotatable state.

A work machine according to another aspect of the present invention includes the control system.

A work machine control method according to another aspect of the present invention is a work machine control method of controlling a work machine including a battery that stores electric power, a connector to which a charging cable used to charge the battery is connected, an electric motor that is driven by electric power supplied from the battery, and a notification device that provides notification, the method including: detecting a connection state between the charging cable and the connector; and causing the notification device to provide notification based on the connection state in a case where the electric motor is in the rotatable state.

### ADVANTAGEOUS EFFECTS OF INVENTION

The above configuration can achieve both higher workability and higher safety during battery charging.

### BRIEF DESCRIPTION OF DRAWINGS

FIG. 1 is a side view illustrating a schematic configuration of a hydraulic excavator as an example of a work machine according to an embodiment of the present invention.
FIG. 2 is a block diagram schematically illustrating a configuration of a control system of the hydraulic excavator.
FIG. 3 is a block diagram schematically illustrating a configuration of the control system.
FIG. 4 is a flowchart illustrating a flow of a method of controlling the hydraulic excavator.
FIG. 5 is a flowchart illustrating a flow of a suppression process included in the method of controlling the hydraulic excavator.
FIG. 6 is an explanatory diagram illustrating an electric motor suppression process included in the suppression process.
FIG. 7 is a flowchart illustrating a flow of an actuator suppression process included in the suppression process.
FIG. 8 is a flowchart illustrating a flow of another method of controlling the hydraulic excavator.

### DESCRIPTION OF EMBODIMENTS

An embodiment of the present invention will be described below with reference to the drawings.

### [1. Schematic Configuration of Work Machine]

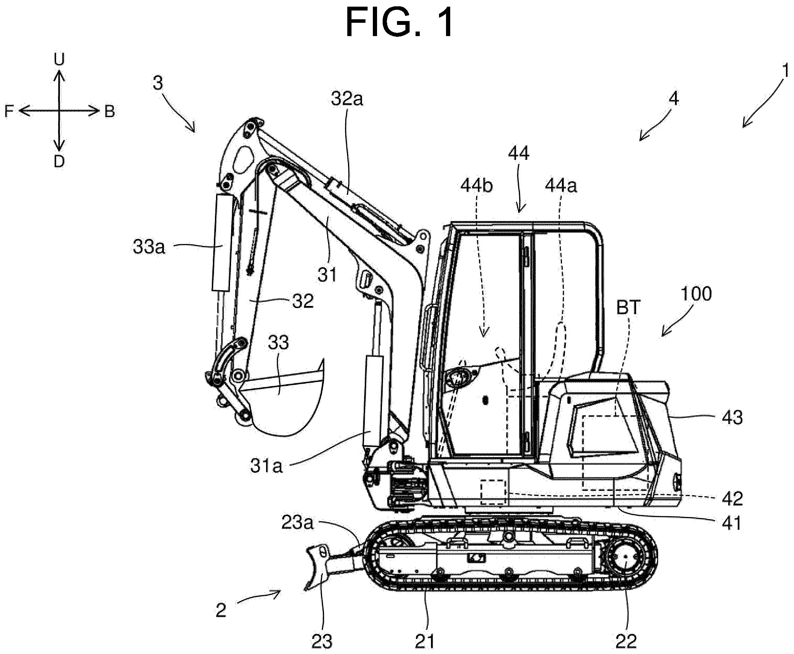

FIG. 1 is a side view illustrating a schematic configuration of a hydraulic excavator 1 (electric excavator) as an example of a work machine according to an embodiment of the present invention. The hydraulic excavator 1 includes a lower traveling body 2, a work machine 3, and an upper turning body 4.

Here, directions used in the description of the present embodiment are defined as follows. A "front" direction refers to the direction an operator (manipulator, driver) is facing when the operator is sitting in a driver's seat 44a disposed in a steering unit 44 of the upper turning body 4 and is looking straight ahead, and a "back" direction refers to the direction opposite to the front direction. The front-back direction of the upper turning body 4 coincides with the front-back direction of the lower traveling body 2 while the upper turning body 4 is not turned (turning angle: 0 degrees) with respect to the lower traveling body 2. The drawings illustrate the hydraulic excavator 1 while the upper turning body 4 is not turned with respect to the lower traveling body 2. Furthermore, "left" and "right" respectively refer to the left and right sides as viewed from an operator sitting in the driver's seat 44a. Furthermore, an up-down direction refers to the gravity direction perpendicular to the front-back direction and the left-right direction, and "up" refers to the upstream side of the gravity direction, and "down" refers to the downstream side of the gravity direction. In the drawings, the symbol "F" represents the front side, "B" represents the back side, "R" represents the right side, "L" represents the left side, "U" represents the up side, and "D" represents the down side, when necessary.

The lower traveling body 2 includes a pair of left and right crawlers 21 and a pair of left and right traveling motors 22. The left and right traveling motors 22 drive the left and right crawlers 21, respectively, to enable the lower traveling body 2 to travel (e.g., move forward and backward).

Each of the left and right traveling motors 22 is composed of a variable displacement piston motor. More specifically, the traveling motors 22 are configured to be switchable between a low-speed state that is used to cause the hydraulic excavator 1 to travel at a low speed (e.g., travel at 2 km/h or less) and a high-speed state that is used to cause the hydraulic excavator 1 to travel at a high speed (e.g., travel at 4 km/h or less). That is, the traveling motors 22 are switchable between the high-speed state and the low-speed state.

The traveling motors 22 are switched between the high-speed state and the low-speed state by changing an inclination angle of an inclinable swash plate (not illustrated) that is incorporated in the traveling motors 22. The inclination angle of the swash plate in the high-speed state is smaller (closer to vertical) than the inclination angle of the swash plate in the low-speed state. As the inclination angle of the swash plate is reduced, a displacement of the traveling motors 22 is reduced. The displacement means the volume of hydraulic oil required for a single rotation of the traveling motors 22. Thus, the displacement of the traveling motors 22 in the high-speed state is smaller than the displacement of the traveling motors 22 in the low-speed state. That is, the displacement of the traveling motors 22 is larger in the low-speed state than in the high-speed state.

Each of the traveling motors 22 may not necessarily be composed of a variable displacement piston motor, and may be composed of, for example, a fixed displacement piston motor. In that case, switching between the high-speed state and the low-speed state is not performed by the traveling motors 22. Thus, the hydraulic excavator 1 preferably includes a device that is integrated with or separated from the traveling motors 22 and enables the traveling motors 22 to function by switching the traveling motors 22 between the high-speed state and the low-speed state. For example, the device may restrict the flow rate of hydraulic oil supplied to the traveling motors 22 to switch the traveling motors 22 from the high-speed state to the low-speed state.

The lower traveling body 2 further includes a blade 23 that performs soil removal work, ground leveling work, and the like. The blade 23 is connected to a front side portion of the lower traveling body 2 so as to be rotatable in the up-down direction. The blade 23 is rotated by a blade cylinder 23a. The blade cylinder 23a is composed of a hydraulic cylinder. In the blade cylinder 23a, a base end portion is supported by the blade 23, and a tip end portion is connected to a front portion of the lower traveling body 2. The blade cylinder 23a is freely movable in an extendable and retractable manner. When the blade cylinder 23a is extended or retracted, the blade 23 is rotated in the up-down direction with respect to the lower traveling body 2.

The work machine 3 includes a boom 31, an arm 32, and a bucket 33. The boom 31, the arm 32, and the bucket 33 are independently driven to perform excavation work for excavating earth and sand or the like.

The boom 31 is rotated by a boom cylinder 31a. The boom cylinder 31a is composed of a hydraulic cylinder. A base end portion of the boom cylinder 31a is supported by a front portion of the upper turning body 4, and the boom cylinder 31a is freely movable in an extendable and retractable manner. When the boom cylinder 31a is extended or retracted, the boom 31 is rotated in the up-down direction and the front-back direction with respect to the upper turning body 4.

The arm 32 is rotated by an arm cylinder 32a. The arm cylinder 32a is composed of a hydraulic cylinder. A base end portion of the arm cylinder 32a is supported by the boom 31, and the arm cylinder 32a is freely movable in an extendable and retractable manner. When the arm cylinder 32a is extended or retracted, the arm 32 is rotated in the up-down direction and the front-back direction with respect to the boom 31.

The bucket 33 is rotated by a bucket cylinder 33a. The bucket cylinder 33a is composed of a hydraulic cylinder. A base end portion of the bucket cylinder 33a is supported by the arm 32, and the bucket cylinder 33a is freely movable in an extendable and retractable manner. When the bucket cylinder 33a is extended or retracted, the bucket 33 is rotated in the up-down direction and the front-back direction with respect to the arm 32.

The upper turning body 4 is located above the lower traveling body 2, and is provided to be turnable with respect to the lower traveling body 2 via a turning bearing (not illustrated). The upper turning body 4 includes a turning frame 41, a turning motor 42, a machine room 43, and the steering unit 44. The upper turning body 4 is turned with respect to the lower traveling body 2 by driving the turning motor 42 disposed on the turning frame 41. The turning frame 41 includes a plurality of metal members joined by welding or the like. The turning motor 42 is composed of a hydraulic motor.

A battery BT is housed in the machine room 43. The battery BT is composed of, for example, a lithium-ion battery, and stores electric power. The battery BT may be composed of a battery obtained by unitizing a plurality of battery cells, or may be composed of a single battery cell. That is, the hydraulic excavator 1 includes the battery BT that stores electric power.

The steering unit 44 is provided in an upper portion of the upper turning body 4. The steering unit 44 includes the driver's seat 44a. A plurality of steering members 44b are disposed around the driver's seat 44a. The plurality of steering members 44b include a lever, a switch, a pedal, and the like. An operator sits in the driver's seat 44a and operates the plurality of steering members 44b to drive the left and right traveling motors 22, the boom cylinder 31a, the turning motor 42, and the like. This enables the hydraulic excavator 1 to perform traveling of the lower traveling body 2, ground leveling work using the blade 23, excavation work using the work machine 3, turning of the upper turning body 4, and the like.

At least one of the plurality of steering members 44b is included in a control system 100 that controls the hydraulic excavator 1. That is, the hydraulic excavator 1 includes the control system 100. A configuration of the control system 100 will be described below.

### [2. Configuration of Control System]

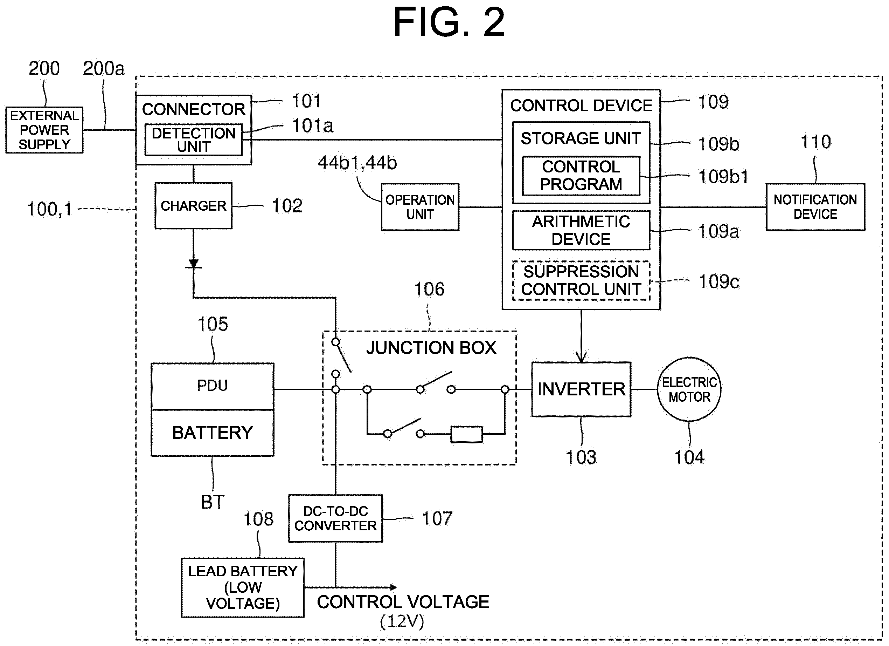

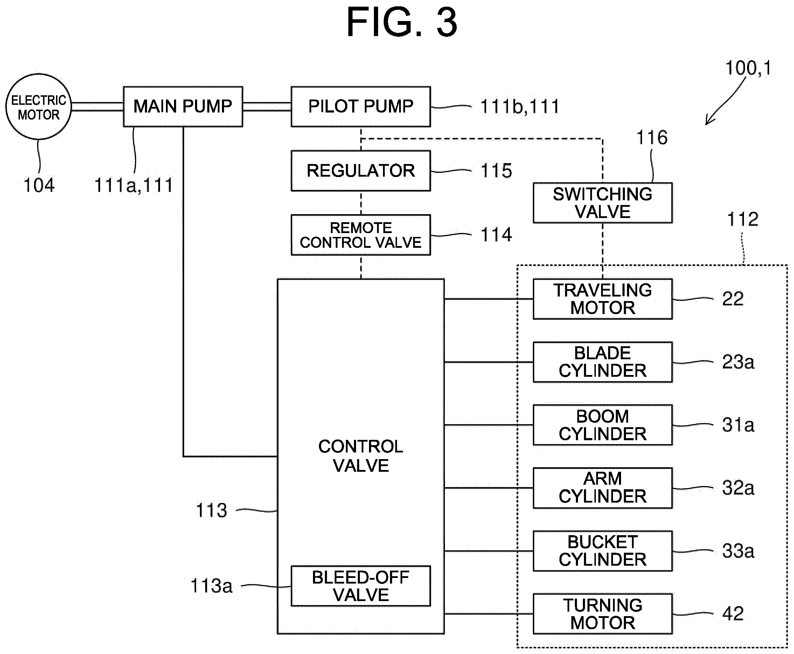

FIGs. 2 and 3 are each a block diagram schematically illustrating the configuration of the control system 100. FIGs. 2 and 3 illustrate components that are required to describe features of the present embodiment, and do not illustrate general components.

As illustrated in FIG. 2, the control system 100 of the hydraulic excavator 1 includes a connector 101, a charger 102, an inverter 103, an electric motor 104, a power drive unit (PDU) 105, a junction box 106, a DC-to-DC converter 107, a lead battery 108, a control device 109, and a notification device 110. The control system 100 also includes the battery BT in addition to the above devices.

The connector 101 (also referred to as a power feed port) is provided, for example, in a right side portion of the upper turning body 4, and is configured to be connectable to a charging cable 200a that extends from an external power supply 200 (e.g., commercial power supply) that is provided separately from the hydraulic excavator 1. A tip end portion of the charging cable 200a is inserted into the connector 101 to connect the charging cable 200a to the connector 101. The battery BT can be charged by connecting the charging cable 200a to the connector 101. That is, the hydraulic excavator 1 includes the connector 101 to which the charging cable 200a used to charge the battery BT is connected. The position at which the connector 101 is disposed is not limited to the above position, and the connector 101 may be disposed, for example, in a left side portion of the upper turning body 4, a back side portion of the upper turning body 4, or a component other than the upper turning body 4 (e.g., lower traveling body 2). The control system 100 may include a plurality of connectors 101 as connectors for normal charging and for fast charging.

The connector 101 is provided with a detection unit 101a. The detection unit 101a detects whether the charging cable 200a is connected to the connector 101, and outputs the detected information to the control device 109. The detection unit 101a is, for example, a limit switch, but is not limited thereto, and may be, for example, a proximity sensor or a photoelectric sensor. That is, the control system 100 of the hydraulic excavator 1 includes the detection unit 101a that detects a connection state between the charging cable 200a and the connector 101. The detection unit 101a may not necessarily be integrated with the connector 101, and may be provided separately from the connector 101.

The charger 102 (also referred to as a power feeder) is connected to the connector 101, and converts an AC voltage supplied from the external power supply 200 via the charging cable 200a and the connector 101 into a DC voltage. The inverter 103 converts a DC voltage supplied from the battery BT into an AC voltage, and supplies the AC voltage to the electric motor 104. Thus, the electric motor 104 is driven. The electric motor 104 is composed of a synchronous motor, an induction motor, or the like. That is, the hydraulic excavator 1 includes the electric motor 104 that is driven by electric power supplied from the battery BT. An AC voltage is supplied from the inverter 103 to the electric motor 104 based on a rotation command output from the control device 109.

The PDU 105 is a battery control unit that controls an internal battery relay to control the input and output of the battery BT. The junction box 106 includes a charger relay, an inverter relay, a fuse, and the like. A voltage output from the charger 102 is supplied to the battery BT via the junction box 106 and the PDU 105. Furthermore, a voltage output from the battery BT is supplied, for example, to the inverter 103 via the PDU 105 and the junction box 106.

The DC-to-DC converter 107 lowers a high DC voltage (e.g., 300 V) supplied from the battery BT via the PDU 105 and the junction box 106 to a low DC voltage (e.g., 12 V). The lead battery 108 stores low DC voltage power. Furthermore, the lead battery 108 outputs the stored electric power. A low DC voltage output from the DC-to-DC converter 107 and the lead battery 108 is supplied to the control device 109 and the like.

The control device 109 controls components of the hydraulic excavator 1. More specifically, the control device 109 is a computer device that includes an arithmetic device 109a and a storage unit 109b. The arithmetic device 109a is, for example, a processor or a microprocessor. In FIG. 2, as an example, the control device 109 includes a single arithmetic device 109a; however, the control device 109 may include two arithmetic devices 109a, or three or more arithmetic devices 109a.

The storage unit 109b is a main storage device such as a read only memory (ROM) or a random access memory (RAM). The storage unit 109b may further include an auxiliary storage device such as a hard disk drive (HDD) or a solid state drive (SSD). The storage unit 109b stores a control program 109b1, data, and the like. For example, the arithmetic device 109a reads the control program 109b1 from the storage unit 109b, and executes arithmetic processing according to the control program 109b1.

The control device 109 can act as a suppression control unit 109c by cooperation of the hardware and software. That is, the control system 100 of the hydraulic excavator 1 includes the suppression control unit 109c. Functions of the suppression control unit 109c will be described below. The control device 109 may be composed of a single piece of hardware, or may be composed of a plurality of pieces of hardware that can communicate with each other.

As described above, a functional unit of the control device 109, that is, the suppression control unit 109c, may be implemented by causing the arithmetic device 109a to execute arithmetic processing according to the control program 109b1, that is, by software, or may be implemented by other methods. The suppression control unit 109c may be implemented, for example, by using an application specific integrated circuit (ASIC), a field programmable gate array (FPGA), or the like. That is, the suppression control unit 109c may be implemented by hardware using a dedicated IC or the like. The suppression control unit 109c may be implemented by using software and hardware in combination.

An operation unit 44b1 included in the plurality of steering members 44b (see FIG. 1) is connected to the control device 109. That is, the hydraulic excavator 1 includes the operation unit 44b1. The operation unit 44b1 is, for example, a dial, and is used for setting of the electric motor 104. The setting of the electric motor 104 using the operation unit 44b1 will be described below.

The notification device 110 is connected to the control device 109, and provides notification based on a drive command (notification command) output from the control device 109. That is, the hydraulic excavator 1 includes the notification device 110 that provides notification. The notification device 110 is composed of a buzzer, but is not limited thereto, and may be composed of, for example, a speaker, a lamp, a liquid crystal display device, an organic EL display device, or the like, or may be composed of a combination thereof. The notification device 110 is disposed, for example, in at least one of the steering unit 44 (see FIG. 1) and a portion near the connector 101. The timing at which the notification device 110 provides notification will be described below.

As illustrated in FIG. 3, the control system 100 of the hydraulic excavator 1 further includes a hydraulic pump 111, an actuator 112, a control valve 113, remote control valves 114, a regulator 115, and a switching valve 116.

The hydraulic pump 111 includes a main pump 111a and a pilot pump 111b. The main pump 111a is composed of a variable displacement pump, but is not limited thereto, and may be composed of, for example, a fixed displacement pump. The main pump 111a is connected to a rotating shaft (output shaft) of the electric motor 104. When the rotating shaft of the electric motor 104 is rotated, the main pump 111a is driven. That is, the hydraulic pump 111 (the main pump 111a in the present embodiment) is driven by the electric motor 104.

The pilot pump 111b is composed of a fixed displacement pump, but is not limited thereto, and may be composed of, for example, a variable displacement pump. As with the main pump 111a, the pilot pump 111b is connected to the rotating shaft of the electric motor 104. When the rotating shaft of the electric motor 104 is rotated, the pilot pump 111b is driven. Each of the main pump 111a and the pilot pump 111b is connected to a hydraulic oil tank (not illustrated) that stores hydraulic oil.

In FIG. 3, as an example, the hydraulic pump 111 includes a single main pump 111a and a single pilot pump 111b; however, the hydraulic pump 111 may include two or more main pumps 111a and two or more pilot pumps 111b. The number of main pumps 111a may be different from the number of pilot pump 111b. For example, the hydraulic pump 111 may include two main pumps 111a and a single pilot pump 111b.

The actuator 112 includes the left and right traveling motors 22, the blade cylinder 23a, the boom cylinder 31a, the arm cylinder 32a, the bucket cylinder 33a, and the turning motor 42.

When the main pump 111a is driven by the electric motor 104, hydraulic oil in the hydraulic oil tank is supplied to the actuator 112 via the control valve 113. Thus, the actuator 112 is driven. That is, the actuator 112 is driven by hydraulic oil discharged from the hydraulic pump 111 (the main pump 111a in the present embodiment).

The control valve 113 controls the flow direction, flow rate (also referred to as supply flow rate), and pressure of hydraulic oil supplied from the hydraulic pump 111 (the main pump 111a in the present embodiment) to the actuator 112. More specifically, when the pilot pump 111b is driven by the electric motor 104, hydraulic oil in the hydraulic oil tank is supplied to the remote control valves 114 via the regulator 115. In the following, the hydraulic oil supplied from the pilot pump 111b may be referred to as pilot oil.

The remote control valves 114 (also referred to as pilot valves) are provided corresponding to the traveling motors 22, the blade cylinder 23a, the boom cylinder 31a, the arm cylinder 32a, the bucket cylinder 33a, and the turning motor 42. That is, the control system 100 includes a plurality of remote control valves 114.

For example, an operation lever included in the plurality of steering members 44b (see FIG. 1) is connected to one of the remote control valves 114. When an operator operates the operation lever, the remote control valve 114 is operated and pilot oil is supplied to the control valve 113. The flow direction and flow rate of hydraulic oil supplied to the actuator 112 are determined according to the pilot oil. For example, according to the direction in which the operation lever is operated by an operator, the flow direction of pilot oil is determined, and the flow direction of hydraulic oil supplied to the actuator 112 is determined. Furthermore, the flow rate of hydraulic oil supplied to the actuator 112 is determined according to the opening degree of the control valve 113. Specifically, a larger operation amount of the operation lever by an operator leads to a larger opening degree of the control valve 113, and as the opening degree of the control valve 113 is increased, the flow rate of hydraulic oil supplied to the actuator 112 is increased.

The control valve 113 includes a bleed-off valve 113a that controls the pressure of hydraulic oil supplied to the actuator 112. The bleed-off valve 113a is composed of an electromagnetic proportional valve, but is not limited thereto, and may be composed of, for example, an electromagnetic on-off valve. Specifically, the bleed-off valve 113a enables part of the hydraulic oil discharged from the main pump 111a to directly return to the hydraulic oil tank (without using the actuator 112). As the flow rate (referred to as return flow rate) of hydraulic oil directly returned to the hydraulic oil tank via the bleed-off valve 113a is increased, the pressure of hydraulic oil supplied to the actuator 112 is reduced. The return flow rate is determined according to the opening degree (referred to as bleed-off opening degree) of the bleed-off valve 113a. The bleed-off opening degree is changed based on a drive command (opening command) output from the control device 109.

The regulator 115 restricts the flow rate and pressure of hydraulic oil supplied from the pilot pump 111b to the remote control valves 114. The regulator 115 is composed of an electromagnetic proportional valve, but is not limited thereto, and may be composed of, for example, an electromagnetic on-off valve. In the present embodiment, the control system 100 includes a single regulator 115. The single regulator 115 is provided at a position closer to the upstream side (pilot pump 111b side) than a position at which the pilot oil discharged from the pilot pump 111b is diverted toward the remote control valves 114. However, the number of regulators 115 is not limited to one. For example, the control system 100 may include a plurality of regulators 115 corresponding to the plurality of remote control valves 114. In that case, the regulators 115 may be provided at a position closer to the downstream side (remote control valve 114 side) than the position at which the pilot oil discharged from the pilot pump 111b is diverted toward the remote control valves 114. The timing at which the regulator 115 is driven will be described below.

The switching valve 116 is composed of an electromagnetic on-off valve that is connected to the pilot pump 111b and the traveling motors 22. The switching valve 116 performs switching between a state in which pilot oil is supplied from the pilot pump 111b to the traveling motors 22 and a state in which the supply of pilot oil is shut off. When the switching valve 116 shuts off the supply of pilot oil, the traveling motors 22 are in the low-speed state. On the other hand, when the switching valve 116 allows pilot oil to pass through and the pilot oil is supplied to the traveling motors 22, the inclination angle of the swash plate incorporated in the traveling motors 22 is changed (reduced), switching the traveling motors 22 to the high-speed state. The configuration of the switching valve 116 is not limited to the above configuration, and the switching valve 116 may be composed of, for example, an electromagnetic proportional valve.

### [3. Method of Controlling Work Machine]

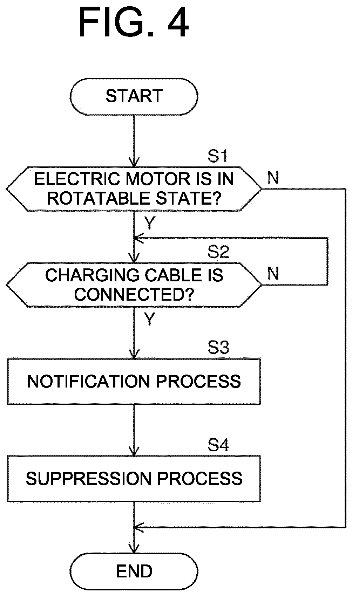

A method of controlling the hydraulic excavator 1 will be described with reference to FIG. 4. FIG. 4 is a flowchart illustrating a flow of a method of controlling the hydraulic excavator 1. The order of processes in step S1 and step S2 may be changed. Furthermore, the order of processes in step S3 and step S4 may be changed.

In step S1, the suppression control unit 109c (see FIG. 2) of the control device 109 determines whether the electric motor 104 is in a rotatable state. In the present embodiment, the rotatable state of the electric motor 104 includes a state in which the electric motor 104 is rotating. In addition, the rotatable state of the electric motor 104 includes a state in which the electric motor 104 is not rotating, but electric power is supplied from the battery BT to the inverter 103, and rotation of the electric motor 104 is quickly started when a rotation command is output from the control device 109. In a case where the electric motor 104 is in the rotatable state (Yes in step S1), the process proceeds to next step S2. In a case where the electric motor 104 is not in the rotatable state (No in step S1), the flowchart ends.

In contrast to the rotatable state of the electric motor 104, a non-rotatable state of the electric motor 104 means a state other than the rotatable state. That is, the non-rotatable state of the electric motor 104 includes a state in which the power supply from the battery BT to the inverter 103 is shut off, and even when a rotation command is output from the control device 109, the electric motor 104 is still not rotated (rotation of the electric motor 104 is not started).

In step S2, the suppression control unit 109c determines whether the charging cable 200a (see FIG. 2) is connected to the connector 101 (see FIG. 2). In the present embodiment, the determination is performed based on detection information output from the detection unit 101a (see FIG. 2). That is, the method of controlling the hydraulic excavator 1 according to the present embodiment includes detecting the connection state between the charging cable 200a and the connector 101. In a case where the charging cable 200a is connected to the connector 101 (Yes in step S2), the process proceeds to next step S3. In a case where the charging cable 200a is not connected to the connector 101 (No in step S2), the suppression control unit 109c continuously determines the connection state between the charging cable 200a and the connector 101.

In step S3, the suppression control unit 109c performs a notification process. When the notification process is performed, the control device 109 outputs a drive command to the notification device 110. The notification device 110 provides notification based on the drive command. That is, the method of controlling the hydraulic excavator 1 according to the present embodiment includes causing the notification device 110 to provide notification based on the connection state between the charging cable 200a and the connector 101 in a case where the electric motor 104 is in the rotatable state. When the notification process is performed, the process proceeds to next step S4.

In step S4, the suppression control unit 109c performs a suppression process. That is, the method of controlling the hydraulic excavator 1 according to the present embodiment includes performing the suppression process based on the connection state between the charging cable 200a and the connector 101 in a case where the electric motor 104 is in the rotatable state. Furthermore, the suppression control unit 109c according to the present embodiment performs the suppression process based on the connection state between the charging cable 200a and the connector 101 in a case where the electric motor 104 is in the rotatable state.

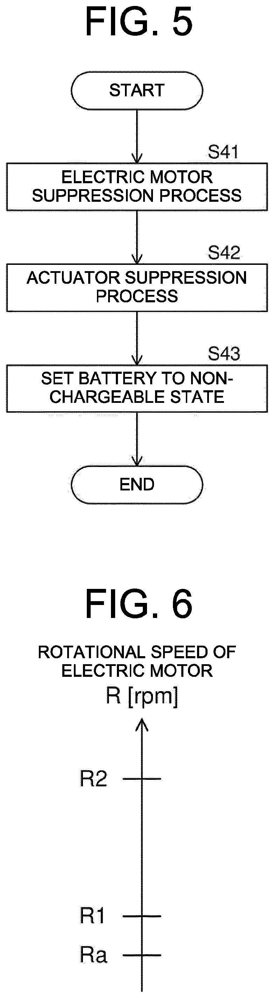

As described above, the suppression control unit 109c is implemented by causing the arithmetic device 109a of the control device 109 to execute arithmetic processing according to the control program 109b1 (see FIG. 2). Thus, the method of controlling the hydraulic excavator 1 related to the suppression process performed by the suppression control unit 109c (including the determination, process, and the like performed before or after the suppression process) is also implemented by causing the arithmetic device 109a to execute arithmetic processing according to the control program 109b1. In the present embodiment, as described above, the arithmetic processing is executed by a single arithmetic device 109a; however, when the control device 109 includes two or more arithmetic devices 109a, the arithmetic processing may be executed by the two or more arithmetic devices 109a. That is, the control program 109b1 of the hydraulic excavator 1 according to the present embodiment is a program that causes at least one arithmetic device 109a to perform the method of controlling the hydraulic excavator 1. The suppression process will be described below. FIG. 5 is a flowchart illustrating a flow of the suppression process. The order of processes in step S41, step S42, and step S43 may be changed.

In step S41, the suppression control unit 109c performs an electric motor suppression process. The electric motor suppression process will be described below. When the electric motor suppression process is performed, the process proceeds to next step S42.

In step S42, the suppression control unit 109c performs an actuator suppression process. That is, the suppression process includes the actuator suppression process. The actuator suppression process will be described below. When the actuator suppression process is performed, the process proceeds to next step S43.

In step S43, the suppression control unit 109c sets the battery BT to a non-chargeable state. In a case where the battery BT is set to the non-chargeable state, charging of the battery BT is prohibited even when the charging cable 200a is connected to the connector 101. The non-chargeable state of the battery BT is continued until the suppression process ends. That is, the method of controlling the hydraulic excavator 1 according to the present embodiment includes causing the battery BT to be in the non-chargeable state while the suppression process is performed.

As described above, the suppression process is performed in a case where the electric motor 104 is in the rotatable state. That is, the electric motor 104 is in the rotatable state while the suppression process is performed. In a case where the electric motor 104 is in the rotatable state, the electric motor 104 is rotating, or even if the electric motor 104 is not rotating, rotation of the electric motor 104 is quickly started when a rotation command is output from the control device 109. That is, in a case where the electric motor 104 is in the rotatable state, it is easy to cause the hydraulic excavator 1 to perform an action. On the other hand, in a case where the electric motor 104 is in the non-rotatable state, even when a rotation command is output from the control device 109, the electric motor 104 is still not rotated (rotation of the electric motor 104 is not started). That is, in a case where the electric motor 104 is in the non-rotatable state, it is difficult (impossible) to cause the hydraulic excavator 1 to perform an action.

Thus, in order to safely perform a charging operation of the battery BT, it is preferable to perform the charging operation of the battery BT when the electric motor 104 is in the non-rotatable state than when the electric motor 104 is in the rotatable state. That is, it is preferable to avoid the charging operation of the battery BT when the electric motor 104 is in the rotatable state. From this viewpoint, as in the present embodiment, the method of controlling the hydraulic excavator 1 preferably includes causing the battery BT to be in the non-chargeable state while the suppression process is performed.

The electric motor suppression process will be described with reference to FIG. 6. FIG. 6 is an explanatory diagram illustrating the electric motor suppression process. Before the electric motor suppression process is performed (in a case where the electric motor suppression process has not been performed), a rotational speed R of the electric motor 104 is set by an operation of the operation unit 44b1 (see FIG. 2) of the steering unit 44 (see FIG. 1) performed by an operator. Specifically, by an operation of the operation unit 44b1, the rotational speed R of the electric motor 104 is set in a range of greater than or equal to a first rotational speed R1 and less than or equal to a second rotational speed R2. The second rotational speed R2 is higher than the first rotational speed R1. That is, the operation unit 44b1 can set the rotational speed R of the electric motor 104 between the first rotational speed R1 and the second rotational speed R2 that is higher than the first rotational speed R1. Specifically, the first rotational speed R1 is the lowest rotational speed R of the electric motor 104 that can be set by an operation performed by an operator, and the second rotational speed R2 is the highest rotational speed R of the electric motor 104 that can be set by an operation performed by an operator.

When the electric motor suppression process is performed, the rotational speed R of the electric motor 104 is automatically switched to a specific rotational speed Ra even in a case where the rotational speed R of the electric motor 104 is set between the first rotational speed R1 and the second rotational speed R2, for example, set to the first rotational speed R1. The specific rotational speed Ra is lower than the first rotational speed R1, which is the lowest rotational speed R that can be set using the operation unit 44b1. Therefore, when the electric motor suppression process is performed, the rotational speed R of the electric motor 104 is reduced. Thus, the output of the electric motor 104 is suppressed. That is, the method of controlling the hydraulic excavator 1 according to the present embodiment includes setting the rotational speed R of the electric motor 104 to the specific rotational speed Ra lower than the first rotational speed R1.

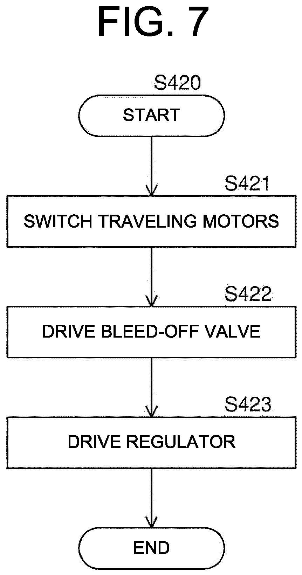

The actuator suppression process will be described with reference to FIG. 7. FIG. 7 is a flowchart illustrating a flow of the actuator suppression process. The order of processes in step S421, step S422, and step S423 may be changed. In step S420, in which the actuator suppression process is started, the traveling motors 22 are assumed to be in the high-speed state, that is, the pilot oil discharged from the pilot pump 111b is assumed to be supplied to the traveling motors 22 via the switching valve 116 (see FIG. 3). However, the condition in step S420 is not limited to the above condition, and for example, the traveling motors 22 may be in the low-speed state in step S420.

In step S421, the traveling motors 22 are switched to the low-speed state. In the present embodiment, as described above, to switch the traveling motors 22 to the low-speed state, the switching valve 116 shuts off the supply of pilot oil to the traveling motors 22 based on a drive command (switching command) output from the control device 109. That is, the actuator suppression process according to the present embodiment includes switching the traveling motors 22 to the low-speed state. As described above, the displacement of the traveling motors 22 is larger in the low-speed state than in the high-speed state; thus, at the same flow rate of hydraulic oil supplied to the traveling motors 22, the rotational speed of the traveling motors 22 is lower in the low-speed state than in the high-speed state. Therefore, when the traveling motors 22 are switched to the low-speed state, the rotation of the traveling motors 22 is suppressed. As a result, the hydraulic excavator 1 travels at a low speed. When the traveling motors 22 are switched to the low-speed state, the process proceeds to next step S422. The process in step S421 may be skipped in a case where the traveling motors 22 are in the low-speed state in step S420.

In step S422, the bleed-off valve 113a (see FIG. 3) is driven. In the present embodiment, as described above, the bleed-off valve 113a is driven based on a drive command output from the control device 109. When the bleed-off valve 113a is driven, (part of) the hydraulic oil discharged from the main pump 111a is directly returned to the hydraulic oil tank, and the pressure of hydraulic oil supplied to the actuator 112 is reduced. Thus, the action (output) of the actuator 112 is suppressed. When the bleed-off valve 113a is driven, the process proceeds to next step S423.

In step S423, the regulator 115 (see FIG. 3) is driven. In the present embodiment, as described above, the regulator 115 is driven based on a drive command output from the control device 109. When the regulator 115 is driven, the pressure and flow rate of hydraulic oil supplied from the pilot pump 111b to the remote control valves 114 are restricted. That is, the pressure and flow rate of hydraulic oil are reduced. Therefore, even with the same operation amount of the remote control valves 114, the opening degree of the control valve 113 is smaller than before the regulator 115 is driven (when the regulator 115 is not driven), leading to a lower flow rate of hydraulic oil supplied to the actuator 112. Thus, the action (output) of the actuator 112 is suppressed. That is, the actuator suppression process according to the present embodiment suppresses the action of the actuator 112. Furthermore, the actuator suppression process includes restricting the pressure and flow rate of hydraulic oil supplied from the hydraulic pump 111 (the main pump 111a in the present embodiment) to the actuator 112.

When the actuator suppression process is performed, the action of the actuator 112 is suppressed, and when the electric motor suppression process is performed, the output of the electric motor 104 is suppressed. Thus, the action of the hydraulic excavator 1 is suppressed when at least one of the electric motor suppression process and the actuator suppression process is performed. Furthermore, both the electric motor suppression process and the actuator suppression process avoid prohibiting the action of the hydraulic excavator 1, that is, permit (allow) the action of the hydraulic excavator 1. Thus, the suppression process according to the present embodiment suppresses the action of the hydraulic excavator 1 while permitting the action of the hydraulic excavator 1. Furthermore, the suppression control unit 109c according to the present embodiment suppresses the action of the hydraulic excavator 1 while permitting the action of the hydraulic excavator 1.

The above configuration can suppress the action of the hydraulic excavator 1 while causing the hydraulic excavator 1 to perform an action, even when the charging cable 200a is connected to the connector 101 in order to charge the battery BT. In a case where the hydraulic excavator 1 is allowed to perform an action while the charging cable 200a is connected to the connector 101, for example, even when the hydraulic excavator 1 is moved to a safer place, an operator does not need to disconnect the charging cable 200a from the connector 101. Thus, an operator can quickly move the hydraulic excavator 1, for example, as compared with a configuration in which the action of the hydraulic excavator 1 is disabled while the charging cable 200a is connected to the connector 101. This makes it possible to achieve higher work efficiency during charging of the battery BT.

When the action of the hydraulic excavator 1 is suppressed, the action of the hydraulic excavator 1 is slow. That is, for example, even when an operator erroneously causes the hydraulic excavator 1 to travel while the charging cable 200a is connected to the connector 101, the hydraulic excavator 1 travels at a low speed (does not suddenly start). This makes it possible to increase the probability that an operator notices that the charging cable 200a is connected to the connector 101. When an operator notices that the charging cable 200a is connected to the connector 101, the operator can suspend the operation of the hydraulic excavator 1 to prevent the charging cable 200a connected to the connector 101 from being pulled, avoiding damage to the charging cable 200a (or the connector 101). Thus, it is possible to prevent an operator from receiving an electric shock due to damage to the charging cable 200a (or the connector 101), achieving higher safety during charging of the battery BT. Therefore, it is possible to achieve both higher work efficiency and higher safety during charging of the battery BT.

From the viewpoint of further increasing the probability that an operator notices that the charging cable 200a is connected to the connector 101 in the configuration in which the hydraulic excavator 1 includes the notification device 110, the following configuration is preferable. That is, as illustrated in FIG. 4, the method of controlling the hydraulic excavator 1 preferably includes causing the notification device 110 to provide notification based on the connection state between the charging cable 200a and the connector 101 in a case where the electric motor 104 is in the rotatable state.

(When an output torque of the electric motor 104 is constant regardless of the rotational speed R of the electric motor 104), as the rotational speed R of the electric motor 104 is reduced, the output of the electric motor 104 is reduced, and the action of the hydraulic excavator 1 is suppressed. Furthermore, the rotational speed R of the electric motor 104 is easily changed by the control device 109. Thus, from the viewpoint of easily suppressing the action of the hydraulic excavator 1, as illustrated in FIGs. 5 and 6, the suppression process preferably includes setting the rotational speed R of the electric motor 104 to the specific rotational speed Ra.

It is preferable to reliably suppress the action of the hydraulic excavator 1 regardless of the rotational speed in a range that can be set by an operation performed by an operator to which the rotational speed R of the electric motor 104 is set. From this viewpoint, as illustrated in FIG. 6, in the configuration in which the hydraulic excavator 1 includes the operation unit 44b1 that is capable of setting the rotational speed R of the electric motor 104 between the first rotational speed R1 and the second rotational speed R2, the specific rotational speed Ra is preferably lower than the first rotational speed R1.

In the configuration in which the hydraulic excavator 1 includes the actuator 112 that is driven by the hydraulic oil discharged from the hydraulic pump 111 driven by the electric motor 104, when the action of the actuator 112 is suppressed, the action of the hydraulic excavator 1 is suppressed. Thus, from the viewpoint of suppressing the action of the hydraulic excavator 1 by suppressing the action of the actuator 112, as illustrated in FIGs. 5 and 7, the suppression process preferably includes the actuator suppression process of suppressing the action of the actuator 112.

The external power supply 200 (see FIG. 2) is often located at a position apart from a position (also referred to as a work position) at which the hydraulic excavator 1 performs work. Thus, in some case, for example, in order to charge the battery BT, the hydraulic excavator 1 is moved from the work position to a position near the external power supply 200, and when charging of the battery BT ends, the hydraulic excavator 1 is moved (returned) to the work position. Therefore, the hydraulic excavator 1 is often moved for the charging operation of the battery BT. Thus, in order to efficiently (reliably) achieve both higher work efficiency and higher safety during charging of the battery BT, it is preferable to suppress a traveling action of the action of the hydraulic excavator 1. From this viewpoint, as illustrated in FIG. 7, in the configuration in which the actuator 112 includes the traveling motors 22 that are switchable between the high-speed state and the low-speed state, the actuator suppression process preferably includes switching the traveling motors 22 to the low-speed state.

In the configuration in which the displacement of the traveling motors 22 is variable, (when the flow rate of hydraulic oil supplied to the traveling motors 22 is constant), the traveling motors 22 are rotated at a lower speed as the displacement of the traveling motors 22 is increased. Thus, from the viewpoint of rotating the traveling motors 22 at a lower speed in the low-speed state than in the high-speed state, as in the present embodiment, the displacement of the traveling motors 22 is preferably larger in the low-speed state than in the high-speed state.

In the configuration in which the hydraulic excavator 1 includes the control valve 113 that controls the pressure and flow rate of hydraulic oil supplied from the hydraulic pump 111 (the main pump 111a in the present embodiment) to the actuator 112, the control valve 113 can restrict the pressure and flow rate of hydraulic oil. As described above, when the pressure and flow rate of hydraulic oil are restricted, the action of the actuator 112 is suppressed, and the action of the hydraulic excavator 1 is suppressed. Thus, in order to suppress the action of the hydraulic excavator 1, it is preferable to reliably suppress the action of the actuator 112. From this viewpoint, as illustrated in FIG. 7, the actuator suppression process preferably includes restricting the pressure and flow rate of hydraulic oil supplied from the hydraulic pump 111 to the actuator 112.

An action prohibition process that enables prohibition of the action of the hydraulic excavator 1 is excluded from the suppression process. Examples of the action prohibition process include a process of setting the electric motor 104 to the non-rotatable state (shutting off the power supply from the battery BT to the inverter 103), and a process of shutting off the supply of pilot oil from the pilot pump 111b to the control valve 113. The supply of pilot oil is shut off, for example, using a cutoff valve (not illustrated) that is provided in a hydraulic circuit in which the pilot pump 111b is connected to the control valve 113.

### [4. Other Methods of Controlling Work Machine]

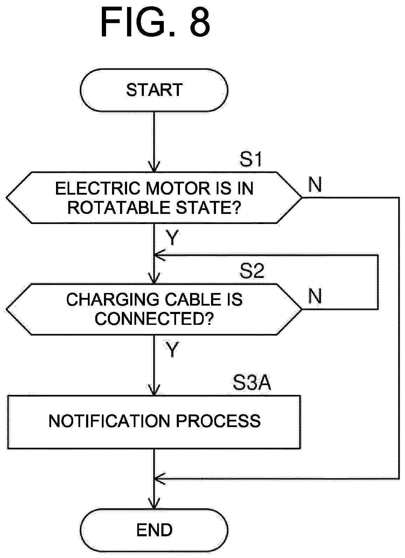

Another method of controlling the hydraulic excavator 1 will be described with reference to FIG. 8. FIG. 8 is a flowchart illustrating a flow of another method of controlling the hydraulic excavator 1. The flowchart illustrated in FIG. 8 is the same as the flowchart illustrated in FIG. 4 except that step S3A is added instead of step S3 and that step S4 is removed. That is, the another method of controlling the hydraulic excavator 1 includes detecting the connection state between the charging cable 200a and the connector 101. The following description will focus on the different points, and the same points (e.g., step S1 and step S2) will not be described.

The hydraulic excavator 1 controlled by the another control method has the same configuration as the hydraulic excavator 1 illustrated in FIGs. 1, 2, and 3. That is, the hydraulic excavator 1 for the another control method includes the battery BT, the connector 101, the electric motor 104, and the notification device 110 (see, in particular, FIG. 2).

In step S3A, a notification process of outputting a drive command from the control device 109 to the notification device 110 is performed. In the another control method, the notification process is performed by at least one of the functional units of the control device 109 that is different from the suppression control unit 109c. That is, in the another control method, the control system 100 may not necessarily include the suppression control unit 109c. However, in the configuration in which the control system 100 includes the suppression control unit 109c, the notification process may be performed by the suppression control unit 109c.

The notification device 110 provides notification based on the drive command output from the control device 109. That is, the another method of controlling the hydraulic excavator 1 includes causing the notification device 110 to provide notification based on the connection state between the charging cable 200a and the connector 101 in a case where the electric motor 104 is in the rotatable state.

The above configuration can cause the notification device 110 to provide notification by connecting the charging cable 200a to the connector 101 even in a case where the electric motor 104 is in the rotatable state. This makes it possible to increase the probability that an operator notices that the charging cable 200a is connected to the connector 101, before causing the hydraulic excavator 1 to perform an action. As a result, it is possible to prevent an operator from causing the hydraulic excavator 1 to perform an action (operating the hydraulic excavator 1) without noticing that the charging cable 200a is connected to the connector 101, avoiding damage to the charging cable 200a (or the connector 101). This makes it possible to achieve higher safety during charging of the battery BT. Furthermore, the electric motor 104 is in the rotatable state; thus, an operator can quickly cause the hydraulic excavator 1 to perform an action, for example, as compared with a configuration in which the action of the hydraulic excavator 1 is stopped while the charging cable 200a is connected to the connector 101. This makes it possible to achieve higher work efficiency during charging of the battery BT. Therefore, it is possible to achieve both higher work efficiency and higher safety during charging of the battery BT.

### [5. Supplement]

In the configuration described in the present embodiment, the suppression process includes the electric motor suppression process and the actuator suppression process; however, the configuration of the suppression process is not limited thereto. For example, the suppression process may include one of the electric motor suppression process and the actuator suppression process.

In the configuration described in the present embodiment, the actuator suppression process includes both switching the traveling motors 22 to the low-speed state and restricting, by the control valve 113, the pressure and flow rate of hydraulic oil supplied to the actuator 112; however, the configuration of the actuator suppression process is not limited thereto. For example, the actuator suppression process may include one of the switching and the restricting.

In the configuration described in the present embodiment, the actuator 112 includes the hydraulic motors and the hydraulic cylinders; however, the configuration of the actuator 112 is not limited thereto. The actuator 112 may include, for example, an electric actuator. Examples of the electric actuator include an electric traveling motor, an electric turning motor, and an electric cylinder.

In the present embodiment, the hydraulic excavator 1 that is a construction machine is described as an example of the work machine; however, the work machine is not limited to the hydraulic excavator 1, and may be a construction machine such as a wheel loader or a mobile crane. Alternatively, the work machine may be an agricultural machine such as a combine harvester or a tractor.

### [6. Appendices]

The method of controlling the hydraulic excavator 1, the control program 109b1, the control system 100, and the hydraulic excavator 1 described in the present embodiment can also be expressed as a work machine control method, a control program, a control system, and a work machine described in the following appendices.

A work machine control method according to appendix (1) is a work machine control method of controlling a work machine including
a battery that stores electric power,
a connector to which a charging cable used to charge the battery is connected, and
an electric motor that is driven by electric power supplied from the battery, the method including:
   detecting a connection state between the charging cable and the connector; and
   performing a suppression process of suppressing an action of the work machine while permitting the action of the work machine based on the connection state in a case where the electric motor is in a rotatable state.

A work machine control method according to appendix (2) is the work machine control method according to appendix (1), wherein
the work machine includes a notification device that provides notification, the method including
causing the notification device to provide notification based on the connection state in a case where the electric motor is in the rotatable state.

A work machine control method according to appendix (3) is the work machine control method according to appendix (1) or (2), wherein
the suppression process includes setting a rotational speed of the electric motor to a specific rotational speed.

A work machine control method according to appendix (4) is the work machine control method according to appendix (3), wherein
the work machine includes an operation unit that is capable of setting the rotational speed of the electric motor between a first rotational speed and a second rotational speed that is higher than the first rotational speed, and
the specific rotational speed is lower than the first rotational speed.

A work machine control method according to appendix (5) is the work machine control method according to any one of appendices (1) to (4), wherein
the work machine includes
   a hydraulic pump that is driven by the electric motor, and
   an actuator that is driven by hydraulic oil discharged from the hydraulic pump, and
the suppression process includes an actuator suppression process of suppressing an action of the actuator.

A work machine control method according to appendix (6) is the work machine control method according to appendix (5), wherein
the actuator includes a traveling motor that is switchable between a high-speed state and a low-speed state, and
the actuator suppression process includes switching the traveling motor to the low-speed state.

A work machine control method according to appendix (7) is the work machine control method according to appendix (6), wherein
a displacement of the traveling motor is larger in the low-speed state than in the high-speed state.

A work machine control method according to appendix (8) is the work machine control method according to any one of appendices (5) to (7), wherein
the work machine includes a control valve that controls a pressure and flow rate of the hydraulic oil supplied from the hydraulic pump to the actuator, and
the actuator suppression process includes restricting the pressure and flow rate of the hydraulic oil.

A work machine control method according to appendix (9) is the work machine control method according to any one of appendices (1) to (8), including
causing the battery to be in a non-chargeable state while the suppression process is performed.

A work machine control program according to appendix (10) causes at least one arithmetic device to perform the work machine control method according to any one of appendices (1) to (9).

A work machine control system according to appendix (11) is a work machine control system that controls a work machine including
a battery that stores electric power,
a connector to which a charging cable used to charge the battery is connected, and
an electric motor that is driven by electric power supplied from the battery, the control system including:
   a detection unit that detects a connection state between the charging cable and the connector; and
   a suppression control unit that suppresses an action of the work machine while permitting the action of the work machine based on the connection state in a case where the electric motor is in a rotatable state.

A work machine according to appendix (12) includes the control system according to appendix (11).

A work machine control method according to appendix (13) is a work machine control method of controlling a work machine including
a battery that stores electric power,
a connector to which a charging cable used to charge the battery is connected,
an electric motor that is driven by electric power supplied from the battery, and
a notification device that provides notification, the method including:
   detecting a connection state between the charging cable and the connector; and
   causing the notification device to provide notification based on the connection state in a case where the electric motor is in the rotatable state.

Although the embodiment of the present invention has been described above, the scope of the present invention is not limited thereto, and can be expanded or modified without departing from the gist of the invention.

### INDUSTRIAL APPLICABILITY

The present invention is applicable, for example, to work machines such as a construction machine and an agricultural machine.

### REFERENCE SIGNS LIST

1 Hydraulic excavator (work machine)
22 Traveling motor
100 Control system
101 Connector
101a Detection unit
104 Electric motor
109a Arithmetic device
109b1 Control program
109c Suppression control unit
110 Notification device
111 Hydraulic pump
112 Actuator
113 Control valve
200a Charging cable
BT Battery
R Rotational speed (rotational speed of electric motor)
R1 First rotational speed
R2 Second rotational speed
Ra Specific rotational speed

## Claims

1. A work machine control method of controlling a work machine including
a battery that stores electric power,
a connector to which a charging cable used to charge the battery is connected, and
an electric motor that is driven by electric power supplied from the battery, the method comprising:
detecting a connection state between the charging cable and the connector; and
performing a suppression process of suppressing an action of the work machine while permitting the action of the work machine based on the connection state in a case where the electric motor is in a rotatable state.

2. The work machine control method according to claim 1, wherein
the work machine includes a notification device that provides notification, the method comprising
causing the notification device to provide notification based on the connection state in a case where the electric motor is in the rotatable state.

3. The work machine control method according to claim 1, wherein
the suppression process includes setting a rotational speed of the electric motor to a specific rotational speed.

4. The work machine control method according to claim 3, wherein
the work machine includes an operation unit that is capable of setting the rotational speed of the electric motor between a first rotational speed and a second rotational speed that is higher than the first rotational speed, and
the specific rotational speed is lower than the first rotational speed.

5. The work machine control method according to claim 1, wherein
the work machine includes
a hydraulic pump that is driven by the electric motor, and
an actuator that is driven by hydraulic oil discharged from the hydraulic pump, and
the suppression process includes an actuator suppression process of suppressing an action of the actuator.

6. The work machine control method according to claim 5, wherein
the actuator includes a traveling motor that is switchable between a high-speed state and a low-speed state, and
the actuator suppression process includes switching the traveling motor to the low-speed state.

7. The work machine control method according to claim 6, wherein
a displacement of the traveling motor is larger in the low-speed state than in the high-speed state.

8. The work machine control method according to claim 5, wherein
the work machine includes a control valve that controls a pressure and flow rate of the hydraulic oil supplied from the hydraulic pump to the actuator, and
the actuator suppression process includes restricting the pressure and flow rate of the hydraulic oil.

9. The work machine control method according to claim 1, comprising
causing the battery to be in a non-chargeable state while the suppression process is performed.

10. A work machine control program that causes at least one arithmetic device to perform the work machine control method according to any one of claims 1 to 9.

11. A work machine control system that controls a work machine including
a battery that stores electric power,
a connector to which a charging cable used to charge the battery is connected, and
an electric motor that is driven by electric power supplied from the battery, the control system comprising:
a detection unit that detects a connection state between the charging cable and the connector; and
a suppression control unit that suppresses an action of the work machine while permitting the action of the work machine based on the connection state in a case where the electric motor is in a rotatable state.

12. A work machine including the control system according to claim 11.

13. A work machine control method including
a battery that stores electric power,
a connector to which a charging cable used to charge the battery is connected,
an electric motor that is driven by electric power supplied from the battery, and
a notification device that provides notification, the method comprising:
detecting a connection state between the charging cable and the connector; and
causing the notification device to provide notification based on the connection state in a case where the electric motor is in the rotatable state.
